# EUROPEAN PATENT APPLICATION

(11) **EP 1 211 284 A1**
(43) Date of publication of application: **05.06.2002**
(21) Application number: 00126133.8
(22) Date of filing: 30.11.2000
(51) Int. Cl.: C08L 23/00

(54) **Semi-finished products or moulded materials of improved toughness made from propylene polymers**

(71) Applicant: Borealis GmbH, 2323 Schwechat-Mannswörth (AT)
(72) Inventor: Reichelt, Norbert Dr., 4501 Neuhofen (AT); Arnold, Manfred Prof. Dr., 06667 Leissling (DE)
(74) Representative: VA TECH Patente GmbH & Co

(57) **Abstract**

The invention relates to semi-finished products or moulded materials of improved toughness made from propylene polymers and from polymeric C₈-C₁₄-vinylaromatics and/or polymethyl methacrylate in the form of embedded nanoparticles. The semi-finished products or moulded materials can be produced by sorption of mixtures made from C₈-C₁₄-vinylaromatics and/or methyl methacrylate with thermally decomposing free-radical generators by semi-finished products, moulded materials or pellets made from propylene polymers, and then polymerization of the absorbed monomers present in the semi-finished products, moulded materials or pellets made from propylene polymers, where appropriate with processing of the modified pellets to give semi-finished products or moulded materials.

The semi-finished products or moulded materials are suitable for use as highly stressed components in the sectors of vehicle construction, household devices, mechanical engineering, electrical devices or electronics.

## Description

The invention relates to semi-finished products or moulded materials of improved toughness and of high strength, made from propylene polymers, and also to a process for their production.

Known process for producing semi-finished products or moulded materials with improved toughness from propylene polymers consist in using polypropylene block copolymers (Yamahiro, M., Macromol. Chem. Phys. 200(1999), 134-41) or blends made from polypropylene EPDM (Gaymans, R., Polym. Mater. Sci. & Engn. 76, 2517-2518) or ethylene-1-octene copolymers (Stricker, F., Kunststoff 88(1998)4, 527-30) or reactor blends made from polypropylene and EPR (Debling, J., Chem. Eng. Sci. 52(1997)12, 1969-2001) as propylene polymers in producing the semi-finished products or moulded materials. The disadvantage of these polypropylenes comprising elastic components is a reduction in strength.

Blends made from polypropylene and polystyrene (Fortelny, I., J. of Applied Polymer Sci. 59(1996) 155-164) or polymethyl methacrylate (DE 198 56 576 A1) by melt-compounding are also known. However, melt-compounding cannot produce nanoparticles of polystyrene or of polymethyl methacrylate and thus achieve a marked improvement in toughness.

It is also known that polypropylene powders can be reacted in the solid phase with monomers, such as styrene or methyl methacrylate, in the present of peroxides (DE 196 07 481 A1). However, the toughness of these modified polypropylenes is not higher than that of unmodified polypropylene.

The object of the invention is to provide semi-finished products or moulded materials of improved toughness, based on propylene polymers, with retention of strength properties.

This object is achieved if the semi-finished products or moulded materials comprise from 95 to 99.3% by weight of propylene polymers and from 5 to 0.7% by weight of polymeric C₈-C₁₄-vinylaromatics and/or polymethyl methacrylate,
where the polymeric C₈-C₁₄-vinylaromatics and/or polymethyl methacrylate have been embedded in the form of finely dispersed-particles with an average particle size of from 5 to 300 nm into the matrix of the propylene polymers, and
where, in order to prepare the particles, mixtures made from C₈-C₁₄-vinylaromatics and/or methyl methacrylate together with thermally decomposing free-radical generators are sorbed by semi-finished products or moulded materials or pellets made from propylene polymers, and
where the sorbed C₈-C₁₄-vinylaromatics and/or methyl methacrylate present in the semi-finished products or moulded materials or pellets made from propylene polymers are then polymerized,
and where pellets are then processed by processes known per se to give the semi-finished products or moulded materials,
and where the semi-finished products or moulded materials have a Charpy notch impact strength (ISO 179/1eA) at +23°C which is at least 100% higher than that of semi-finished products or moulded materials in which no polymeric C₈-C₁₄-vinylaromatics or polymethyl methacrylate are present.

Preference is given here to inventive semi-finished products or moulded materials whose Charpy notch impact strength (ISO 179/1eA) at +23°C is at least 250%, particularly preferably at least 500%, higher than that of semi-finished products or moulded materials in which no polymeric C8-C14-vinylaromatics of polymethyl methacrylate are present.

Preferred inventive semi-finished products or moulded materials here are those whose Charpy notch impact strength (ISO 179/1eA) at +23°C is at least 20 kJ/m², particularly preferably at least 27 kJ/m², very particularly preferably at least 33 kJ/m².
The semi-finished products are preferably profiles, tubes or sheets, and the moulded materials are preferably injection-moulded parts or mould materials produced by blow moulding.
The propylene polymers present in the inventive semi-finished products or moulded materials are preferably composed
A) of conventional propylene polymers, preferably Ziegler-Natta-catalysis-derived or metallocene-catalysis-derived propylene homopolymers and/or copolymers of propylene, ethylene and/or α-olefins having from 4 to 18 carbon atoms and a propylene content of from 80.0 to 99.9% by weight, being random copolymers, block copolymers and/or random block copolymers, with melt indices from 0.1 to 300 g/10 min at 230°C/2.16 kg, preferably from 1 to 100 g/10 min at 230°C/2.16 kg, present in proportions of from 50 to 100% by weight in the propylene polymers, and
B) of a polyolefin mixture with an M_{w}/Mₙ ratio of from 2 to 6 and with a melt index of from 1 to 40 g/10 min at 230°C/2.16 kp, present in proportions of from 0 to 10% by weight in the propylene polymers and composed of
B1) from 60 to 98% by weight of a crystalline copolymer made from 85 to 99.5% by weight of propylene and from 15 to 0.5% by weight of ethylene and/or an α-olefin of the general formula CH₂=CHR, where R is a linear or branched alkyl radical having from 2 to 8 carbon atoms, and
B2) from 2 to 40% by weight of an elastic copolymer made from 20 to 70% by weight of ethylene and from 80 to 30% by weight of propylene and/or an α-olefin of the general formula CH₂=CHR, where R is a linear or branched alkyl radical having from 2 to 8 carbon atoms, and/or
C) of substantially amorphous polypropylenes or propylene copolymers having a proportion of less than 10% by weight of crystalline polypropylene or of crystalline propylene copolymer and an enthalpy of fusion below 40 J/g and a melt index from of 0.1 to 100 g/10 min at 230°C/2.16 kg, where the substantially amorphous polypropylene is a homopolymer of propylene and/or a copolymer of propylene made from at least 80 mol% of propylene and not more than 20 mol% of one or more α-olefins of the general formula CH₂=CHR, where R is a linear or branched alkyl radical having from 2 to 8 carbon atoms, and the substantially amorphous polypropylenes are present in proportions of from 0 to 20% by weight in the propylene polymers and/or
D) of non-isotactic propylene homopolymers with a melting point of 145 to 165°C, with a melt viscosity above 200 000 cps at 190°C, with an enthalpy of crystallization of from 4 to 10 cal/g and with a proportion of from 35 to 55% by weight soluble in diethyl ether, these homopolymers being present in proportions of from 0 to 20% by weight in the propylene polymers.

Preferred suitable propylene polymers A) in the inventive semi-finished products or moulded materials are polypropylenes with bimodal molar mass distribution which have been prepared in a reactor cascade using Ziegler-Natta catalysts or using metallocene catalysts, and whose weight-average molar mass M_{w} is from 500 000 to 1 500 000 g/mol, and whose number-average molar mass Mₙ is from 25 000 to 100 000 g/mol and whose M_{w}/Mₙ value is from 5 to 60, preferably whose weight-average molar mass M_{w} is from 600 000 to 1 000 000 g/mol, whose number-average molar mass Mₙ is from 30 000 to 100 000 g/mol and whose M_{w}/Mₙ value is from 15 to 35.

Examples of the polyolefin mixtures B), present where appropriate in the inventive semi-finished products or moulded materials and made from crystalline copolymers and from elastic copolymers are the polymer mixtures described in EP 0 400 333 A2 or EP 0 472 946 A2.

The substantially amorphous polypropylenes or propylene copolymers C) present where appropriate in the inventive semi-finished products or moulded materials are in particular stereoblock polypropylenes produced, for example, using high-activity, metal-oxide-fixed Ziegler-Natta catalysts (Collette, J., Macromolecules 22 (1989), 3851-8; DE 28 30 160 A1) or using soluble Ziegler-Natta catalysts (de Candia, F., Makromol. Chem. 189 (1988), 815-21).

Examples of the non-isotactic propylene homopolymers D) present where appropriate in the inventive semi-finished products or moulded materials are the products described in EP 0 475 307 A1.

The polymeric C₈-C₁₄-vinylaromatics present where appropriate in the inventive semi-finished products or moulded materials are preferably polymers having monomer units of styrene, of styrene derivatives, such as bromostyrene, butenylstyrene, chloroethylstyrene, chlorostyrene, dimethylstyrene, dimethyl tert-butylsilylstyrene, divinylbenzene, divinyltoluene, ethylbutenylstyrene, fluorostyrene, isopropenylstyrene, methylbutenylstyrene, methylfluorostyrene, methylstyrene, pentenylstyrene, propenylstyrene, tert-butylstyrene, triethylsilylstyrene, trimethylsilylstyrene, or α-methylstyrene, of α-methylstyrene derivatives, such as butenyl-α-methylstyrene or vinylbiphenyl, and/or of vinylbiphenyl derivatives, such as vinylbromobiphenyl, vinylbutenylbiphenyl, vinylchlorobiphenyl, vinylfluorobiphenyl and/or vinylmethylbiphenyl.

The preferred average particle size at which the polymeric C₈-C₁₄-vinylaromatics and/or polymethyl methacrylate have been embedded as finely dispersed particles into the matrix of the propylene polymers in the semi-finished products or moulded materials is from 40 to 150 nm.

The embedding of the finely dispersed nanoparticles brings about local plastic flow under mechanical stress, and thus restricts macroscopic cracking and increases the toughness of the inventive semi-finished products or moulded materials.

According to the invention, the semi-finished products or moulded materials composed of a matrix made from propylene polymers and of embedded polymeric vinylaromatics and/or polymethyl methacrylate are produced by a process in which the semi-finished products, moulded materials or pellets made from propylene polymers are subjected to sorption using mixtures made from 95.0 to 99.9% by weight of C₈-C₁₄-vinylaromatics and/or methyl methacrylate and 5.0 to 0.1% by weight of thermally decomposing free-radical generators, at temperatures of from 45 to 150°C below the softening points of the semi-finished products, moulded materials or pellets, and with residence times of from 1 h to 72 h, and then, using a rise in temperature to 25 to 90°C below the softening points of the semi-finished products, moulded materials or pellets, and with residence times from 0.2 to 10 h, the same are subjected to polymerization of the 0.7 to 5% by weight of sorbed C₈-C₁₄-vinylaromatics and/or methyl methacrylate present in the semi-finished products, moulded materials or pellets made from propylene polymers, where the temperature for the polymerization of the sorbed C₈-C₁₄-vinylaromatics and/or methyl methacrylate present in the semi-finished products, moulded materials or pellets is at least 20°C higher than the sorption temperature, and where the pellets are then processed by processes known per se to give semi-finished products or moulded materials.

Preferred C₈-C₁₄-vinylaromatics for producing semi-finished products or moulded materials in the inventive process are styrene, styrene derivatives, such as bromostyrene, butenylstyrene, chloroethylstyrene, chlorostyrene, dimethylstyrene, dimethyl-tert-butylsilylstyrene, divinylbenzene, divinyltoluene, ethylbutenylstyrene, fluorostyrene, isopropenylstyrene, methylbutenylstyrene, methylfluorostyrene, methylstyrene, pentenylstyrene, propenylstyrene, tert-butylstyrene, triethylsilylstyrene, trimethylsilylstyrene, α-methylstyrene, α-methylstyrene derivatives, such as butenyl-α-methylstyrene or vinylbiphenyl, and/or vinylbiphenyl derivatives, such as vinylbromobiphenyl, vinylbutenylbiphenyl, vinylchlorobiphenyl, vinylfluorobiphenyl and/or vinylmethylbiphenyl.

Preferred suitable thermally decomposing free-radical generators for the inventive process for producing semi-finished products or moulded materials are:
- acyl peroxides, such as acetyl benzoyl peroxide, benzoyl peroxide, 4-chlorobenzoyl peroxide, 3-methoxybenzoyl peroxide and/or methylbenzoyl peroxide;
- alkyl peroxides, such as allyloxypropionyl peroxide, allyl tert-butyl peroxide, 2,2-bis(tert-butylperoxy) butane, 1,1-bis(tert-butylperoxy)-3,3,5-trimethylcyclohexane, n-butyl 4,4-bis(tert-butylperoxy)valerate, diisopropylaminomethyl tert-amyl peroxide, dimethylaminomethyl tert-amyl peroxide, diethylaminomethyl tert-butyl peroxide, dimethylaminomethyl tert-butyl peroxide, dinitrobenzoyl peroxide, 1,1-di(tert-amylperoxy)cyclohexane, tert-amyl peroxide, tert-butyl cumyl peroxide, tert-butylpermaleic acid, tert-butyl peroxide and/or 1-hydroxybutyl n-butyl peroxide.
- peresters and peroxycarbonates, such as butyl peracetate, cumyl peracetate, cumyl perpropionate, cyclohexyl peracetate, di-tert-butyl peradipate, di-tert-butyl perazelate, di-tert-butyl perglutarate, di-tert-butyl perphthalate, di-tert-butyl persebazate, 4-nitrocumyl perpropionate, 1-phenylethyl perbenzoate, phenylethyl nitroperbenzoate, tert-butyl bicyclo[2.2.1]heptanepercarboxylate, tert-butyl 4-carbomethoxyperbutyrate, tert-butyl cyclobutanepecarboxylate, tert-butyl cyclohexylperoxycarboxylate, tert-butyl cyclopentylpercarboxylate, tert-butyl cyclopropanepercarboxylate, tert-butyl dimethylpercinnamate, tert-butyl 2-(2,2-diphenylvinyl)perbenzoate, tert-butyl 4-methoxyperbenzoate, tert-butyl perbenzoate, tert-butyl pernaphthoate, tert-butyl peroxy isopropyl carbonate, tert-butyl pertoluate, tert-butyl 1-phenylcyclopropylpercarboxylate, tert-butyl 2-propylperpentene-2-oate, tert-butyl 1-methyl cyclopropylpercarboxylate, tert-butyl 4-nitrophenylperacetate, tert-butyl nitrophenylperoxycarbamate, tert-butyl N-succinimidopercarboxylate, tert-butyl percrotonate, tert-butyl permaleate, tert-butyl permethacrylate, tert-butyl peroctoate, tert-butylperoxy isopropyl carbonate, tert-butyl perisobutyrate, tert-butyl peracrylate and/or tert-butyl perpropionate;
- azo compounds such as 2,2'-azobis(methyl 2-methylpropionate), azobis(N,N'-diethyleneisobutyramidine), 2,2'-azobis-2-methylproprionitrile, 1,1'-azobis-1-phenylethane and/or 1,1' -azobis-1-phenylpropane.

Mixtures of these free-radical generators are also suitable.

The sorption of mixtures made from C₈-C₁₄-vinylaromatics and/or methyl methacrylate and from thermally decomposing free-radical generators by semi-finished products, moulded materials or pellets made from propylene polymers may take place from the liquid phase or from the gas phase of the monomers and free-radical generators. Sorption from the gas phase is preferred.

Conventional known processes for processing the pellets comprising finely dispersed particles made from polymeric C₈-C₁₄-vinylaromatics and/or polymethyl methacrylate to give semi-finished products or moulded materials are extrusion, injection molding and blow moulding.

In one preferred version of the inventive process, the sorption of the mixtures made from C₈-C₁₄-vinylaromatics and/or methyl methacrylate and from thermally decomposing free-radical generators takes place from the gas phase, and the polymerization of the sorbed C₈-C₁₄-vinylaromatics and/or methyl methacrylate present in the semi-finished products, moulded materials or pellets takes place by storing the semi-finished products, moulded materials or pellets in water for from 2 to 5 hours at temperatures in the range from 90 to 125°C, at superatmospheric pressure if necessary.

The inventive semi-finished products or moulded materials are preferably produced by sorption using the semi-finished products or moulded materials with C₈-C₁₄-vinylaromatics and/or methyl methacrylate and free-radical polymerization of the sorbed monomers within the semi-finished product or moulded material.

Inventive semi-finished products or moulded materials may also be produced using pellets made from polypropylenes during the sorption using C₈-C₁₄-vinylaromatics and/or methyl methacrylate, free-radical polymerization of the sorbed monomers within the pellets and then processing of the modified pellets to give semi-finished products or moulded materials. During the sorption, it is useful here to use bifunctional monomers, such as divinylbenzene, in a mixture with other C₈-C₁₄-vinylaromatics and/or methyl methacrylate. However, higher toughness values are achieved with direct modification of the semi-finished products or moulded materials, since phase separation processes within the melt during processing of the modified pellets result in some reduction in the extent of finely dispersed embedding of the polymeric vinylaromatics and/or polymethyl methacrylate at the nanometer level.

Preferred application sectors for the inventive semi-finished products or moulded materials are highly stressed components in the sectors of vehicle construction, household devices, mechanical engineering, electrical devices or electronics.

The examples below illustrate the invention: Melt indices (MFI, melt flow rate) were determined in accordance with ISO 1133/DIN 53735 at 230°C with a load of 2.16 kg.

The content of included, polymerized vinylaromatics or methyl methacrylate was in each case determined by FTIR spectroscopy.

### Example 1

Flat specimens are injection-moulded from a polypropylene homopolymer (melt index 2.4 g/10 min at 230°C/2.16 kg). The testing of the Charpy notch impact strength (ISO 179/1eA) and of the flexural modulus of elasticity (ISO 178) of the untreated flat specimens at 23°C gives a notch impact strength of 5.0 kJ/m² and a flexural modulus of elasticity of 1 400 MPa.

The flat specimens are treated for 4 days at 10 Torr/60°C with a gas mixture made from styrene/divinylbenzene/tert-butyl peracetate (ratio 100:10:5) and then stored for 5 h in water at 100°C.

After drying for 4 h in a vacuum drying cabinet at 100°C, the content of included, polymerized styrene/divinylbenezene in the flat specimens is 2.6% by weight. The average particle size of the embedded particles (contrasted thin sections, transmission electron microscope) is 55 nm. Testing of the treated flat specimens at 23°C gives a notch impact strength of 57.2 kJ/m² and a flexural modulus of elasticity of 1 320 MPa.

### Example 2

Flat specimens are injection-moulded from a propylene-ethylene copolymer (melt index 5.0 g/10 min at 230°C/2.16 kg, ethylene content 4.2% by weight). The testing of the Charpy notch impact strength (ISO 179/1eA) and of the flexural modulus of elasticity (ISO 178) of the untreated flat specimens at 23°C gives a notch impact strength of 9.0 kJ/m² and a flexural modulus of elasticity of 1 200 MPa.

The flat specimens are treated for 3 days at 10 Torr/55°C with methyl methacrylate, the amount of methyl methacrylate absorbed being 2.4% by weight. The treated specimens are then subjected to sorption of tert-butyl peroxypivalate for 8 h at 40°C and then stored for 4 h in water at 105°C.

After drying for 4 h in a vacuum drying cabinet at 100°C, the content of included, polymerized methyl methacrylate in the flat specimens is 2.1% by weight. The average particle size of the embedded particles (contrasted thin sections, transmission electron microscope) is 45 nm. Testing of the treated flat specimens at 23°C gives no fracture in the notch impact strength test, and a flexural modulus of elasticity of 1 160 MPa.

### Example 3

A propylene-ethylene copolymer in pellet form (melt index 5.0 g/10 min at 230°C/2.16 kg, ethylene content 6.0% by weight, Charpy notch impact strength (ISO 179/1eA) at 23°C of test specimens produced from compression-moulded plaques: 13.0 kJ/m²) is treated for 4 days at 10 Torr/60°C with a gas mixture made from styrene/divinylbenzene/tert-butyl peracetate (ratio 100:10:5) and then stored for 5 h in water at 100°C.

After the treatment of the pellets, the content of included, polymerized styrene/divinylbenzene is 1.6% by weight. The pellets are tested after pressing to give plaques. The notch impact strength of the flat specimens produced from plaques is 27 kJ/m².

### Example 4

Flat specimens are injection-moulded from a polypropylene homopolymer (melt index 2.4 g/10 min at 230°C/2.16 kg). The testing of the Charpy notch impact strength (ISO 179/1eA) and of the flexural modulus of elasticity (ISO 178) of the untreated flat specimens at 23°C gives a notch impact strength of 4.8 kJ/m² and a flexural modulus of elasticity of 1 400 MPa.

The flat specimens are treated for 5 days at 21°C with a mixture made from styrene/tert-butyl perbenzoate (ratio 100:1), and then their surfaces washed with n-heptane and dried, followed by storage for 4 h at 120°C. After this storage the content of included, polymerized styrene in the flat specimens is 1.3% by weight.

The average particle size of the embedded particles (scanning electron microscope, etched section surface) is 60 nm. Testing of the treated flat specimens at 23°C gives a notch impact strength of 33.8 kJ/m².

## Claims

1. Semi-finished products or moulded materials made from propylene polymers and from polymeric vinylaromatics and/or polymethyl methacrylate, **characterized in that** the semi-finished products or moulded materials comprise from 95 to 99.3% by weight of propylene polymers and from 5 to 0.7% by weight of polymeric C₈-C₁₄-vinylaromatics and/or polymethyl methacrylate,
where the polymeric C₈-C₁₄-vinylaromatics and/or polymethyl methacrylate have been embedded in the form of finely dispersed particles with an average particle size of from 5 to 300 nm into the matrix of the propylene polymers, and
where, in order to prepare the particles, mixtures made from C₈-C₁₄-vinylaromatics and/or methyl methacrylate together with thermally decomposing free-radical generators are sorbed by semi-finished products or moulded materials or pellets made from propylene polymers, and
where the sorbed C₈-C₁₄-vinylaromatics and/or methyl methacrylate present in the semi-finished products or moulded materials or pellets made from propylene polymers are then polymerized,
and where pellets are then processed by processes known per se to give the semi-finished products or moulded materials,
and where the semi-finished products or moulded materials have a Charpy notch impact strength (ISO 179/1eA) at +23°C which is at least 100% higher than that of semi-finished products or moulded materials in which no polymeric C₈-C₁₄-vinylaromatics or polymethyl methacrylate are present.

2. Semi-finished products or moulded materials according to Claim 1, **characterized in that** the semi-finished products are profiles, tubes or sheets, and the moulded materials are injection-moulded parts or moulded materials produced by blow moulding.

3. Semi-finished products or moulded materials according to Claim 1 or 2, **characterized in that** the propylene polymers are composed
A) of conventional propylene polymers, preferably Ziegler-Natta-catalysis-derived or metallocene-catalysis-derived propylene homopolymers and/or copolymers of propylene, ethylene and/or α-olefins having from 4 to 18 carbon atoms and a propylene content of from 80.0 to 99.9% by weight, being random copolymers, block copolymers and/or random block copolymers, with melt indices from 0.1 to 300 g/10 min at 230°C/2.16 kg, preferably from 1 to 100 g/10 min at 230°C/2.16 kg, present in proportions of from 50 to 100% by weight in the propylene polymers, and
B) of a polyolefin mixture with an M_{w}/Mₙ ratio of from 2 to 6 and with a melt index of from 1 to 40 g/10 min at 230°C/2.16 kp, present in proportions of from 0 to 10% by weight in the propylene polymers and composed of
B1) from 60 to 98% by weight of a crystalline copolymer made from 85-99.5% by weight of propylene and from 15 to 0.5% by weight of ethylene and/or an α-olefin of the general formula CH₂=CHR, where R is a linear or branched alkyl radical having from 2 to 8 carbon atoms, and
B2) from 2 to 40% by weight of an elastic copolymer made from 20 to 70% by weight of ethylene and from 80 to 30% by weight of propylene and/or an α-olefin of the general formula CH₂=CHR, where R is a linear or branched alkyl radical having from 2 to 8 carbon atoms, and/or
C) of substantially amorphous polypropylenes or propylene copolymers having a proportion of less than 10% by weight of crystalline polypropylene or of crystalline propylene copolymer and an enthalpy of fusion below 40 J/g and a melt index from of 0.1 to 100 g/10 min at 230°C/2.16 kg, where the substantially amorphous polypropylene is a homopolymer of propylene and/or a copolymer of propylene made from at least 80 mol% of propylene and not more than 20 mol% of one or more α-olefins of the general formula CH₂=CHR, where R is a linear or branched alkyl radical having from 2 to 8 carbon atoms, and the substantially amorphous polypropylenes are present in proportions of from 0 to 20% by weight in the propylene polymers and/or
D) of non-isotactic propylene homopolymers with a melting point of 145 to 165°C, with a melt viscosity above 200 000 cps at 190°C, with an enthalpy of crystallization of from 4 to 10 cal/g and with a proportion of from 35 to 55% by weight soluble in diethyl ether, these homopolymers being present in proportions of from 0 to 20% by weight in the propylene polymers.

4. Semi-finished products or moulded materials according to one or more of Claims 1 to 3, **characterized in that** the polymeric C₈-C₁₄-vinylaromatics are polymers having monomer units of styrene, styrene derivatives, α-methylstyrene, α-methylstyrene derivatives, vinylbiphenyl and/or vinylbiphenyl derivatives.

5. Semi-finished products or moulded materials according to one or more of Claims 1 to 4, **characterized in that** the polymeric C₈-C₁₄-vinylaromatics and/or polymethyl methacrylate have been embedded as of finely dispersed particles with an average particle size of from 40 to 150 nm into the matrix of the propylene polymers.

6. Process for producing semi-finished products or moulded materials, composed of a matrix made from propylene polymers and of embedded polymeric vinylaromatics and/or polymethyl methacrylate, with a notch impact strength at 23°C above 20 kJ/m², **characterized in that** semi-finished products, moulded materials or pellets made from propylene polymers are subjected to sorption using mixtures made from 95.0 to 99.9% by weight of C₈-C₁₄-vinylaromatics and/or methyl methacrylate and 5.0 to 0.1% by weight of thermally decomposing free-radical generators, at temperatures of from 45 to 150°C below the softening points of the semi-finished products, moulded materials or pellets, and with residence times of from 1 h to 72 h, and then, using a rise in temperature to 25 to 90°C below the softening points of the semi-finished products, moulded materials or pellets, and with residence times from 0.2 to 10 h, the same are subjected to polymerization of the 0.7 to 5% by weight of sorbed C₈-C₁₄-vinylaromatics and/or methyl methacrylate present in the semi-finished products, moulded materials or pellets made from propylene polymers, where the temperature for the polymerization of the sorbed C₈-C₁₄-vinylaromatics and/or methyl methacrylate present in the semi-finished products, moulded materials or pellets is at least 20°C higher than the sorption temperature, and where pellets are then processed by processes known per se to give semi-finished products or moulded materials.

7. Process for producing semi-finished products or moulded materials according to Claim 6, **characterized in that** the C₈-C₁₄-vinylaromatics used comprise styrene, styrene derivatives, α-methystyrene, α-methylstyrene derivatives, vinylbiphenyl and/or vinylbiphenyl derivatives.

8. Process for producing semi-finished products or moulded materials according to Claim 6 or 7, **characterized in that** the thermally decomposing free-radical generators used comprise acyl peroxides, alkyl peroxides, hydroperoxides, peroxycarbonates, peresters and/or azo compounds.

9. Process for producing semi-finished products or moulded materials according to one or more of Claims 6 to 8, **characterized in that** absoprtion of the mixtures made from C₈-C₁₄-vinylaromatics and/or methyl methacrylate and from thermally decomposing free-radical generators takes place from the gas phase, and the polymerization of the absorbed C₈-C₁₄-vinylaromatics and/or methyl methacrylate present in the semi-finished products, moulded materials or pellets takes place by storing the semi-finished products, moulded materials or pellets in water for from 2 to 5 hours at temperatures in the range from 90 to 125°C, at superatmospheric pressure if necessary.

10. Use of the semi-finished products or moulded materials according to one or more of Claims 1 to 5 for highly stressed components in the sectors of vehicle construction, household devices, mechanical engineering, electrical devices or electronics.
